# EUROPEAN PATENT APPLICATION

(11) **EP 3 981 250 A1**
(43) Date of publication of application: **13.04.2022**
(21) Application number: 20201108.6
(22) Date of filing: 09.10.2020
(51) Int. Cl.: A01N 31/02, A01P 3/00

(54) **COMPOSITION FOR PROTECTING PLANTS, FRUITS AND/OR VEGETABLES AGAINST PLANT, FRUIT AND/OR VEGETABLE PESTS INCLUDING PLANT, FRUIT AND/OR VEGETABLE DISEASES**

(71) Applicant: Université de Liège, 4000 Liège (BE)
(72) Inventor: MASSART, Sébastien, 5030 Gembloux (BE); SARE, Abdoul Razack, 5030 Gembloux (BE); JIJAKLI, Mohamed Haissam, 5030 Gembloux (BE)
(74) Representative: ABYOO

(57) **Abstract**

The present invention relates to a composition for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases, said composition comprising at least one prebiotic agent or at least one prebiotic molecule selected from the group consisting of erythritol, xylitol, their isomers or derivates, and mixtures thereof. The present invention also relates to the use of such a composition.

## Description

### Field of the invention

The present invention relates to a composition for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases. The present invention also relates to the use of such a composition.

### Background of the invention

Plants, fruits and vegetables are subjected to many pests, pathogens and diseases. In particular, fruits and vegetables are subjected to postharvest diseases, inducing up to 55% of losses. To date, synthetic chemical pesticides are mostly used to control these pests and pathogens like Botrytis cinerea. For example, for apple fruits, chemical pesticides are sprayed just few days before harvest, and could be a source of hazard for consumers. These pesticides are effective but unsustainable because they are increasingly associated to many risks on human health, environmental degradation and development of resistance by pests and pathogens.

Alternatives to synthetic chemical pesticides to manage plant, fruit and/or vegetable pests and pathogens are notably (1) the use of natural non-phytotoxic molecules for biological control, (2) the use of microbial based products for biological control and (3) the use of Biocontrol Agents (BCA).

BCA are promising solution for a sustainable agriculture, especially for fruit and vegetables, but their efficacy in field condition is still unreliable and reduced compared to chemical pesticides. Indeed, their efficacy and stability are nevertheless reduced in real condition since, once applied, BCA meet complex microbial community that might interfere with their efficacy. In particular, the epiphytic carposphere microbiote includes beneficial microorganisms that can support plant growth, health and harvested good shelf life. Up to now, many microorganisms were isolated from these microbial communities to control fruit postharvest wound pathogens like Botrytis spp. and Penicilium spp.. For apple fruit, one of these BCA is the yeast Pichia anomala strain K isolated on apple to control B. cinerea and P. expansum. Once sprayed, beneficial microorganisms like BCA meet a resident microbiome, where a complex ecological relation like commensalism, mutualism, parasitism, antibiosis, competition and amnelism occur. These interactions might affect directly or indirectly their reliability and efficacy in real condition.

Indeed, any plant organ hosts very diverse and abundant microbial communities, also called plant microbiome or plant microbiote or plant microbiota. These microbial communities have been estimated at 10⁶-10⁷ cells/cm² on the phyllosphere and 10⁶-10⁹ cells/g in the rhizosphere. Plant can therefore be considered as super-organism harboring very diverse microbial communities which provide specific functions and traits to the plants. These functions can be synthetized in 5 key roles: improving nutrient acquisition, sustaining plant growth under biotic and/or abiotic stress, inducing resistance against pathogens, interactions with plant or human pathogens and interactions with other trophic levels (insects, herbivorous). The plant microbial communities can be considered as a key factor for plant health and productivity.

Unfortunately, plant microbiome or plant microbiote is/are generally not sufficient in order to sufficiently protect plant, fruit and/or vegetable against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases

In view of the above it is of interest and it is an object of the present invention to enhance the microbiote efficacy for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases.

It is also an object of the present invention to identify and to provide agents (notably BCA) as efficient alternatives to chemical pesticides for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases.

### Summary of the invention

It is an object of the invention to provide a composition comprising molecules, in particular natural non-phytotoxic molecules, and/or BCA for enhancing the microbiote efficacy for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases.

It is also an object of the invention to provide a composition for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases.

More particularly, it is an object of the invention to provide a composition comprising molecules, in particular natural non-phytotoxic molecules, and/or BCA for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases.

To this end, according to the invention, there is provided a composition for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases, said composition comprising at least one prebiotic agent or at least one prebiotic molecule selected from the group consisting of erythritol, xylitol, their isomers or derivates, and mixtures thereof.

Xylitol responds to the following formula: C₅H₁₂O₅, or HO(CH₂)(CHOH)₃(CH₂)OH.

Erythritol responds to the following formula: C₄H₁₀O₄, or HO(CH₂)(CHOH)₂(CH₂)OH.

In the context of the present invention, based on the FAO definition of "pest" in terms of the International Plant Protection Convention and phytosanitary measures worldwide (FAO, 1990; revised FAO, 1995; IPPC, 1997), the terms "plant pests" mean any species, strain or biotype of plant, animal, or pathogenic agent injurious to plants, for example fungi, oomycetes, bacteria, viruses, viroids, virus-like organisms, phytoplasmas, protists, protozoa, nematodes, insects and parasitic plants. In this sense, the terms "plant pests" include all plant pathogens, i.e. all biological organisms that can cause disease symptoms and/or plant diseases and/or significantly reduce the productivity, quality, and even cause the death of plants.

In the context of the present invention, the terms "plant diseases" mean anything and in particular any species, strains or biotypes of microorganisms, including fungi, oomycetes, myxomycetes, bacteria, viruses, viroids, virus-like organisms and phytoplasmas, that prevents a plant from performing to its maximum potential, notably in terms of development and productivity.

In the context of the present invention, the term "prebiotics" means any molecules driving the microbial communities living on or in a plant, including biocontrol agents, toward a composition or a functional status limiting the development of plant pathogens. In the context of the present invention, the term "prebiotics" also responds to the following definition established by the International Scientific Association for Probiotics and Prebiotics (ISAPP): a substrate, a molecule or a compound that is selectively used by a host microorganism to produce a health benefit. When concerning plant, according to the present invention, the term "prebiotics" consequently means a substrate, a molecule or a compound that is selectively used by one or several host microorganism(s) to produce a health benefit for a plant.

In the context of the present invention, the term "derivates" means any molecules derivatising from erythritol or xylitol. For examples, the "derivates" of xylitol or erythritol may be their polymers, ethers, esters, nitrogen-, halogen-, and sulphur-containing derivatives, acetals, and ketals. This list is not exhaustive.

In the context of the present invention, the term "for protecting plant" refer to plant protection that can be for example achieved by killing the pests, by delaying their growth and/or reproduction or by reducing sporulation.

In the context of the present invention, it was surprisingly determined that a composition according to the invention, i.e. a composition comprising at least one prebiotic agent or at least one prebiotic molecule selected from the group consisting of erythritol, xylitol, their isomers or derivates, and mixtures thereof, significantly enhances the microbiote efficacy for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases.

The invention is defined by the independent claims. The dependent claims define advantageous embodiments.

Advantageously, the composition according to the invention further comprises at least one biocontrol agent (BCA) selected from the group comprising yeasts, fungi, bacteria, oomycetes, myxomycetes, molecules supporting, eliciting and/or stimulating plant defences against pests, pesticides applied against pests, and mixtures thereof.

Preferably, according to the invention, said biocontrol agent (BCA) is selected from the group comprising Bacillus amyloliquefaciens; Acremonium brevae; Aureobasidium pullulans; Bacillus licheniformis; Bacillus pumilus; Bacillus subtilis; Bacillus thuringiensis; Bacillus spp; Beauveria spp; Brevundimonas diminuta; Burkholderia cepacia; Burkholderia gladioli; Candida sake; Candida guilliermondii; Candida membranifaciens; Candida oleophila; Cryptococcus albidus; Cryptococcus avus; Cryptococcus laurentii; Cryptococcus spp.; Debaryomyces hansenii; Enterobacter aerogenes; Enterobacter cloacae;K loeckera apiculate; Metarhizium anisopliae; Metschnikowia fructicola; Metschnikowia pulcherrima; Meyerozyma guilliermondii; Paecilomyces spp; Paenibacillus polymyxa; Pantoea agglomerans; Penicillium frequentans; Penicillium sp.; Pestalotiopsis neglecta; Pichia anomala; Pichia guilliermondii; Pseudomonas spp; Pseudomonas aeruginosa; Pseudomonas cepacia; Pseudomonas corrugata; Pseudomonas fluorescens; Pseudomonas glathei; Pseudomonas putida; Pseudomonas syringae; Rahuella aquatilis; Rhodotorula glutinis; Saccharomyces cerevisiae; Streptomyces anulatus; Streptomyces hygroscopicus; Talaromyces flavus; Trichoderma harzianum; Trichoderma spp.;Trichoderma viride; Trichosporon pullulans; Verticillium lecanii; and mixtures thereof.

More preferably, according to the invention, the yeast Pichia anomala is the yeast Pichia anomala strain K and in that the yeast Candida oleophila is the yeast Candida oleophila strain O.

Advantageously, according to the invention said erythritol and/or said xylitol and/or their isomers or derivates is/are present in the composition at a concentration ranging from 1 mg/L to 50 g/L, preferably ranging from 10 mg/L to 1 g/L.

Advantageously, the composition according to the invention further comprises a solvent and/or a co-formulant selected from the group comprising detergents, emulsifiers, dispersing agents, anti-foaming agents, penetration enhancers, stabilizing agents, deposit builders, buffering agents, oils, foam modifiers, humectants, ionic or non-ionic wetting agents, anti-freeze agents, preservative agents such as antioxidants, absorbent agents, thickeners, buffers, sticker agents, diluents or a mixture thereof, preferably a surfactant selected from the group comprising detergents, emulsifiers, dispersing agents, anti-foaming agents, penetration enhancers, humectants or ionic or non-ionic wetting agents, or a mixture thereof.

Indeed, the composition according to the invention can contain additional components, such as co-formulants, to obtain a product with good handling, efficacy and stability properties. The term "co-formulant" designates any substance other than the elicitor component according to the invention, that is intentionally added to the elicitor composition according to the invention.

The composition according to the invention can comprise a surfactant, i.e. a compound that lowers the surface tension of a liquid, allowing easier spreading. The surfactant can be a detergent, an emulsifier (including alkyl polyglucosides glycerol ester or polyoxyethylene (20) sorbitan monolaurate), a dispersing agent (including sodium chloride, potassium chloride, potassium nitrate, calcium chloride or starch of corn), a foaming agent (including derivates of tartric acid, malic acid or alcohols), a penetration enhancer, a humectant (including ammonium sulfate, glycerin or urea) or a wetting agent of ionic or non-ionic type or a mixture of such surfactants.

The terms "penetration enhancer" mean a compound that accelerates the uptake of active ingredient through the cuticle of a plant into the plant, i.e. the rate of uptake, and/or increases the amount of active ingredient absorbed into the plant. Classes of substances known as penetration enhancers, include alkyl phosphates, such as tributyl phosphate and tripropyl phosphate, and naphthalenesulphonic acid salts.

The term "dispersing agent" means a substance added to a suspension, usually a colloid, to improve the separation of particles and to prevent settling or clumping.

The term "emulsifier" means a substance that stabilizes an emulsion, i.e. a mixture of two or more liquids. Mention can be made of the emulsifier sold under the trade names Tween^{®} 20, which essentially comprises polyoxyethylene (20) sorbitan monolaurate (polysorbate 20).

Eventually, the composition according to the invention can comprise one or more other active compounds selected from the group comprising herbicides, insecticides, plant growth regulators or plant immune system elicitors.

Preferably, the composition according to the invention is under the form of (micro-) granules or granulates, capsules, tablets, powders, liquids, (micro-) emulsions, nano-formulations, (micro-) encapsulates, (water-soluble) concentrates, (emulsifiable) concentrates, (concentrated) suspensions, (concentrated) dispersions, wettable granulates, granules, powders or aerosols.

The composition according to the invention can be ready to be applied to the plant by means of a suitable device, such as a spraying device, or can be the commercial concentrated compositions which have to be diluted before application to the plant.

Preferably, the composition according to the invention, is/are from natural, synthetic, or biosynthetic origin. More specifically, said erythritol, xylitol, their isomers or derivates, and mixtures thereof is/are from natural, synthetic, or biosynthetic origin.

The present invention is also about the use of a composition according to the invention to protect plants, fruits and/or vegetables against plant, fruit and/or vegetable pests including plant, fruit and/or vegetable diseases, in particular to protect plants, fruits and/or vegetables against postharvest plant, fruit and/or vegetable pests including postharvest plant, fruit and/or vegetable diseases, particularly in agricultural and horticultural applications.

Preferably, for the use according to the invention, plant pests are selected from the group comprising fungi, oomycetes, myxomycetes, bacteria, viruses, viroids, virus-like organisms, phytoplasmas, protists, protozoa, nematodes and arthropods including insects.

Non-limiting examples of phytopathogenic fungi and fungal-like organisms that can be targeted by the compositions according to the present invention include Pyricularia spp.; Puccinia spp.; Erysiphe spp.; Cochliobolus spp.; Helminthosporium spp.; Drechslera spp.; Rhynchosporium spp.; Cercospora spp.; Botrytis spp.; Botryosphaeria spp.; Alternaria spp.; Venturia spp.; Cladosporium spp.; Monilinia spp.; Didymella spp.; Phoma spp.; Aspergillus spp., Aureobasidium spp.; Ascochyta spp.; Stemphylium spp.; Pleospora spp.; Peronospora spp.; Pythium spp.; Phytophthora spp.; Rhizoctonia spp.; Sclerotinia spp.; Sclerotium spp.; Colletotrichum spp.; Mycosphaerella spp.; Diaporthe spp.; Elsinoe spp.; Verticillium spp.; Pyrenopeziza spp.; Fusarium spp.; Typhula spp.; Ustilago spp.; Urocystis spp.; Tilletia spp.; Ramularia spp.; Penicillium spp.; Acremoniella spp.; Allomyces spp.; Amorphothec spp.; Aspergillius spp.; Blastocladiella spp.; Candida spp.; Chaetomium spp.; Coccidioides spp.; Conidiobolus spp.; Coprinopsis spp.; Corynascus spp.; Cryphonectria spp., Cryptococcus spp.; Cunninghamella spp.; Curvularia spp.; Debaryomyces spp.; Diplodia spp; Emericella ssp.; Encephalitozoon spp.; Eremothecium spp.; Gaeumanomyces spp.; Geomyces spp.; Gibberella spp.; Gloeophyllum spp.; Glomus spp.; Hypocrea spp.; Kluyveromyces spp.; Lentinula spp.; Leucosporidium spp.; Macrophomina spp.; Magnaportha spp.; Metharhizium spp.; Mucor spp.; Neurospora spp.; Nectria spp.; Paracocidioides spp.; Phaeopsheria spp.; Phanerochaete spp.; Phakopsora spp.; Phymatotrichum spp.; Pneumocystis spp.; Pyronema spp.; Rhizoctonia spp.; Rhizopus spp.; Saccharomyces spp.; Scerotium spp.; Spizellomyces spp.; Thermomyces spp.; Thielaviopsis spp.; Trametes spp.; Trichophyton spp.; Cadophora spp.; Epicoccum spp.; Neofabraea spp.; Neonectria spp.; Trichothecium spp.; Melodie spp.; or Yarrowia spp..

In particular, the following phytopathogenic fungi and fungal-like organisms are responsible for postharvest plant, fruit and/or vegetable pests including postharvest plant, fruit and/or vegetable diseases:
Botrytis spp.; Botryosphaeria spp.; Alternaria spp.; Venturia spp.; Cladosporium spp.; Monilinia spp.; Phoma spp.; Aspergillus spp., Aureobasidium spp.; Phytophthora spp.; Colletotrichum spp.; Fusarium spp.; Penicillium spp.; Aspergillius spp.; Cryptococcus spp.; Mucor spp.; Nectria spp.; Rhizopus spp.; Cadophora spp.; Epicoccum spp.; Neofabraea spp.; Neonectria spp.; Trichothecium spp.; Melodie spp..

Plant diseases caused by fungi that can be targeted by the compositions according to the present invention include yeasts, rusts, smuts, mildews, molds, mushrooms and toadstools.

Non-limiting examples of phytopathogenic bacteria that can be targeted by the compositions according to the present invention include the genii Erwinia, Pseudomonas, Xanthomonas, and Ralstonia.

Non-limiting examples of phytopathogenic viruses that can be targeted by the compositions according to the present invention include Cucumber Mosaic Virus, Barley Yellow Mosaic Virus, Strawberry Mild Yellow Edge Virus, Strawberry Latent Ringspot Virus, Beet Necrotic Yellow Vein Virus and Potato Virus Y.

Non-limiting examples of phytopathogenic insects that can be targeted by the compositions according to the present invention include notably aphids, beetles, bugs, hoppers, locusts, mites, ants, ticks, trips, whiteflies, rootworms, maggots, weevils, (stem)borers, caterpillars, butterflies, leaf-rolers, and leaf-miners.

Advantageously, the composition according to the invention is used for application before harvest or post-harvest to the whole plant, the roots, the leaves, the flowers, fruits, seeds, seedlings or seedlings pricking out, propagation material such as tubers or rhizomes, plants pricking out, and/or to the soil or substrate wherein the plant is growing or in which it is desired to grow, by spraying, drenching, soaking, dipping, fumigating, injection or administration through fertilizing or irrigation systems.

The present invention is also about a method for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases, comprising:
- applying an effective and substantially non-phytotoxic amount of the composition according to the invention to at least one of a part of a plant, a fruit and/or a vegetable; and
- obtaining protection of said plant, fruit and/or vegetable against plant, fruit and/or vegetable pests including plant, fruit and/or vegetable diseases, in particular protection of said plant, fruit and/or vegetable against postharvest plant, fruit and/or vegetable pests including postharvest plant, fruit and/or vegetable diseases.

Preferably, in the method according to the invention, said pathogens are selected from the group comprising fungi, oomycetes, myxomycetes, bacteria, viruses, viroids, virus-like organisms, phytoplasmas, protists, protozoa, nematodes and arthropods including insects.

Preferably, in the method according to the invention, the composition according to the invention is applied before harvest or post-harvest to the whole plant, the roots, the leaves, the flowers, fruits, seeds, seedlings or seedlings pricking out, propagation material such as tubers or rhizomes, plants pricking out, and/or to the soil or substrate wherein the plant is growing or in which it is desired to grow, by spraying, drenching, soaking, dipping, fumigating, injection or administration through fertilizing or irrigation systems.

In the context of the present invention, the terms "effective and non-phytotoxic amount" mean an amount of the composition according to the present invention that is sufficient to induce control or destruction of the plant pests present or liable to appear on the plants, and that does not have a phytotoxicity impact for said plants.

### Short description of the drawings

These and further aspects of the invention will be explained in greater detail by way of examples and with reference to the accompanying figure in which:

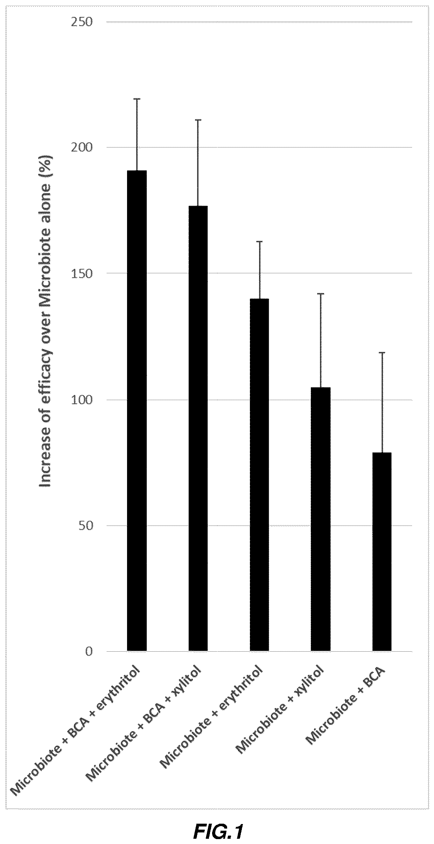

**Fig. 1** shows the increases of efficacy over a microbiote alone when compositions according to the invention are used/applied to control the pathogen B. cinerea.

### Detailed description of embodiments of the invention and examples

### a. Experimental procedure

Erythritol and xylitol at a concentration of 1 g/L and/or microbial community (i.e. the microbiote alone) (normalized at 10⁵ CFU/ml) and/or the Pichia anomala strain K (as the one mentioned in the document WO02069720) as BCA (10⁵ CFU/mL) were applied alone or in combination on wounds made on disinfected (with 10% commercial sodium hypochlorite) and rinsed (with demineralised water) commercial Golden delicious apple.

Three wounds of 6 mm diameter and 2 mm depth were made per apple with a cork-borer. Each apple was placed in a plastic container with sterile paper filter in the bottom. 40 µL of inoculum suspension was applied per wound and 10 fruits were used per treatment. 3 ml of sterile water were poured in the filter after to keep humidity.

After 24h, wounds were inoculated with 10⁶ spores/ml of B. cinerea. Wound diameters were measured after 10 days and the 6 mm diameter of the cork-borer was subtracted from each measure.

Each lesion value recorded on each wound was normalized on the microbiote alone with the formula: (Diameter microbiote alone - Diameter of treatment)/ Diameter microbiote alone.

### b. Results

Results are presented on Figure 1. As it can be seen, erythritol and xylitol applied alone significantly increase the efficacy of the microbiote to control the pathogen B. cinerea. This efficacy is even more increased when the Pichia anomala strain K as BCA is applied simultaneously with erythritol or xylitol to control the pathogen B. cinerea.

The present invention has been described in terms of specific embodiments, which are illustrative of the invention and not to be construed as limiting. More generally, it will be appreciated by persons skilled in the art that the present invention is not limited by what has been particularly shown and/or described hereinabove.

Use of the verbs "to comprise", "to include", "to be composed of", or any other variant, as well as their respective conjugations, does not exclude the presence of elements other than those stated.

Use of the article "a", "an" or "the" preceding an element does not exclude the presence of a plurality of such elements.

## Claims

1. Composition for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases, said composition comprising at least one prebiotic agent or at least one prebiotic molecule selected from the group consisting of erythritol, xylitol, their isomers or derivates, and mixtures thereof.

2. Composition according to claim 1, **characterized in that** it further comprises at least one biocontrol agent (BCA) selected from the group comprising yeasts, fungi, bacteria, oomycetes, myxomycetes, molecules supporting, eliciting and/or stimulating plant defences against pests, pesticides applied against pests, and mixtures thereof.

3. Composition according to claim 2, **characterized in that** said biocontrol agent (BCA) is selected from the group comprising Bacillus amyloliquefaciens; Acremonium brevae; Aureobasidium pullulans; Bacillus licheniformis; Bacillus pumilus; Bacillus subtilis; Bacillus thuringiensis; Bacillus spp; Beauveria spp; Brevundimonas diminuta; Burkholderia cepacia; Burkholderia gladioli; Candida sake; Candida guilliermondii; Candida membranifaciens; Candida oleophila; Cryptococcus albidus; Cryptococcus avus; Cryptococcus laurentii; Cryptococcus spp.; Debaryomyces hansenii; Enterobacter aerogenes; Enterobacter cloacae;K loeckera apiculate; Metarhizium anisopliae; Metschnikowia fructicola; Metschnikowia pulcherrima; Meyerozyma guilliermondii; Paecilomyces spp; Paenibacillus polymyxa; Pantoea agglomerans; Penicillium frequentans; Penicillium sp.; Pestalotiopsis neglecta; Pichia anomala; Pichia guilliermondii; Pseudomonas spp; Pseudomonas aeruginosa; Pseudomonas cepacia; Pseudomonas corrugata; Pseudomonas fluorescens; Pseudomonas glathei; Pseudomonas putida; Pseudomonas syringae; Rahuella aquatilis; Rhodotorula glutinis; Saccharomyces cerevisiae; Streptomyces anulatus;
Streptomyces hygroscopicus; Talaromyces flavus; Trichoderma harzianum; Trichoderma spp.;Trichoderma viride; Trichosporon pullulans; Verticillium lecanii; and mixtures thereof.

4. Composition according to claim 3, **characterized in that** the yeast Pichia anomala is the yeast Pichia anomala strain K and **in that** the yeast Candida oleophila is the yeast Candida oleophila strain O.

5. Composition according to any of preceding claims, **characterized in that** said erythritol and/or said xylitol and/or their isomers or derivates is/are present in the composition at a concentration ranging from 1 mg/L to 50 g/L, preferably ranging from 10 mg/L to 1 g/L.

6. Composition according to any of preceding claims, **characterized in that** it further comprises a solvent and/or a co-formulant selected from the group comprising detergents, emulsifiers, dispersing agents, anti-foaming agents, penetration enhancers, stabilizing agents, deposit builders, buffering agents, oils, foam modifiers, humectants, ionic or non-ionic wetting agents, anti-freeze agents, preservative agents such as antioxidants, absorbent agents, thickeners, buffers, sticker agents, diluents or a mixture thereof, preferably a surfactant selected from the group comprising detergents, emulsifiers, dispersing agents, anti-foaming agents, penetration enhancers, humectants or ionic or non-ionic wetting agents, or a mixture thereof.

7. Composition according to any of preceding claims, **characterized in that** the composition is under the form of (micro-) granules or granulates, capsules, tablets, powders, liquids, (micro-) emulsions, nano-formulations, (micro-) encapsulates, (water-soluble) concentrates, (emulsifiable) concentrates, (concentrated) suspensions, (concentrated) dispersions, wettable granulates, granules, powders or aerosols.

8. Use of a composition according to any claims 1 to 7 to protect plants, fruits and/or vegetables against plant, fruit and/or vegetable pests including plant, fruit and/or vegetable diseases, in particular to protect plants, fruits and/or vegetables against postharvest plant, fruit and/or vegetable pests including postharvest plant, fruit and/or vegetable diseases, particularly in agricultural and horticultural applications.

9. The use according to claim 8 wherein said plant pests are selected from the group comprising fungi, oomycetes, myxomycetes, bacteria, viruses, viroids, virus-like organisms, phytoplasmas, protists, protozoa, nematodes and arthropods including insects.

10. The use according to claims 8 or 9 for application before harvest or post-harvest to the whole plant, the roots, the leaves, the flowers, fruits, seeds, seedlings or seedlings pricking out, propagation material such as tubers or rhizomes, plants pricking out, and/or to the soil or substrate wherein the plant is growing or in which it is desired to grow, by spraying, drenching, soaking, dipping, fumigating, injection or administration through fertilizing or irrigation systems.

11. A method for protecting plants, fruits and/or vegetables against plant, fruit and/or vegetable pests including plant, fruit and/or vegetable diseases, in particular for protecting plants, fruits and/or vegetables against postharvest plant, fruit and/or vegetable pests including postharvest plant, fruit and/or vegetable diseases, comprising:
- applying an effective and substantially non-phytotoxic amount of the composition according to any claims 1 to 7 to at least one of a part of a plant, a fruit and/or a vegetable; and
- obtaining protection of said plant, fruit and/or vegetable against plant, fruit and/or vegetable pests including plant, fruit and/or vegetable diseases, in particular protection of said plant, fruit and/or vegetable against postharvest plant, fruit and/or vegetable pests including postharvest plant, fruit and/or vegetable diseases.

12. The method according to claim 11, wherein said pathogens are selected from the group comprising fungi, oomycetes, myxomycetes, bacteria, viruses, viroids, virus-like organisms, phytoplasmas, protists, protozoa, nematodes and arthropods including insects.

13. The method according to claims 11 or 12, wherein the composition is applied before harvest or post-harvest to the whole plant, the roots, the leaves, the flowers, fruits, seeds, seedlings or seedlings pricking out, propagation material such as tubers or rhizomes, plants pricking out, and/or to the soil or substrate wherein the plant is growing or in which it is desired to grow, by spraying, drenching, soaking, dipping, fumigating, injection or administration through fertilizing or irrigation systems.
